(19) Europäisches Patentamt
European Patent Office
Office européen des brevets

(11) Publication number: **0 197 747**
**A2**

(12) # EUROPEAN PATENT APPLICATION

(21) Application number: 86302396.6

(22) Date of filing: 01.04.86

(51) Int. Cl.[4]: G 01 N 27/30

(30) Priority: 28.03.85 GB 8508053

(43) Date of publication of application:
15.10.86 Bulletin 86/42

(84) *Designated Contracting States:*
AT BE CH DE FR GB IT LI LU NL SE

(71) Applicant: Genetics International, Inc.
222 Third Street Suite 0174
Cambridge Massachusetts 02142(US)

(72) Inventor: Armstrong, Frazer Andrew
Sarah's Cottage, Wilcote Lane
Ramsden, Oxfordshire OX7 3BA(GB)

(72) Inventor: Oliver, Brian Nigel
212 Northampton Terrace 600 Airport Road
Chapel Hill, North Carolina 27514(US)

(72) Inventor: Hill, Hugh Allen Oliver
9 Glover Close
Cumnor Oxfordshire OX2 9JH(GB)

(74) Representative: Clifford, Frederick Alan et al,
MARKS & CLERK 57/60 Lincoln's Inn Fields
London WC2A 3LS(GB)

(54) **Graphite or glassy carbon electrode with modified surface.**

(57) An electrode has a graphite or glassy carbon surface at least part of which is an edge-plane graphite surface or glassy carbon surface to which Cr(III) complexes are attached by surface C-O groups. The graphite can be polished pyrolytic graphite. The complex coverage can be 5-20%. The complex may comprise proteins, enzyme substrates, specific binding agents, intermediate metabolites or the like, e.g. the protein plastocyanin, so that direct unmediated electrochemistry is possible at the electrode.



Croydon Printing Company Ltd.

M&C FOLIO: 230P50022 WANGDOC: 0327s

GRAPHITE OR GLASSY CARBON ELECTRODE WITH MODIFIED SURFACE

The invention relates to a graphite or glassy carbon electrode with a modified surface, to a method of production of such an electrode, and to the use of such an electrode in bioelectrochemistry.

Over the last three years it has become known to investigate and exploit redox enzyme systems by electrochemical methods. These involve use of the enzyme and a substrate which is caused to react by the enzyme. The existence or amount of the reaction is measured at an electrode using a mediator compound to transfer electrons from the reaction to the electrode.

A typical example is the system glucose/glucose oxidase/ferrocene (as mediator), as described in our co-pending European Patent Applications 82305597.( Our further European Applications 84.303090,84.303091, 84.303085,84.303086, and 84303087 also disclose relevant technology). In a suitable circuit an electrode in contact with such a system will detect a charge, transferred from the enzyme by the mediator. A typical use of such a system is for the selective detection or

measurement of blood glucose level in whole blood by an electrode on which layers, or a mixture, of mediator and enzyme are immobilised.

In practice the various components of such a system can be located on the electrode or in the contacting medium; moreover, the system can be used as a test either for substrate or for enzyme or for mediator levels. Elaboration of the basic concepts involves for example the variation of such levels by immunological or nucleic-acid-probe reactions and thus using the system in immunological assay or in DNA/RNA sequencing investigations.

All of the above systems, however, are indirect to the extent that they rely upon a mediator, e.g. a ferrocene to transfer the charge from the enzyme molecule to the electrode itself.

The present invention is concerned with direct electrochemical investigation, where charge is transferred to the electrode without a separate mediator compound.

Graphite is known to possess a "basal plane" surface (in the direction of easy cleavage) and an "edge plane" surface at right angles thereto. Recently, it has been

established that electrodes made of pyrolytic graphite and fashioned so as to exhibit an "edge" surface (relative to the graphite structure) give a quasi-reversible electrochemical response with certain electron transfer proteins. Glassy carbon has similar characteristics. Furthermore, this property has been found to be particularly active in those proteins with negatively charged interaction domains in the presence of mobile multivalent cations.

We believe that electrode surface functional groups and (where present) the mobile ions, promote reversible protein-electrode binding which precedes electron transfer. In the case of graphite activity could be clearly identified with the polished edge surface which, unlike the basal plane, possesses a high coverage of C-O functionalities including, from chemical analysis, phenolic and carboxylic groups. Glassy carbon also has these types of functionalities. It is believed that these allow rapid and reversible interaction with the lysine-rich positively-charged haem-edge region of mitochondrial cytochrome c and, accordingly, promote rapid heterogeneous electron transfer. Well-behaved electrochemistry of proteins bearing negatively-charged interaction domains can thus be readily achieved particularly through the inclusion of mobile multivalent cations such as $Mg^{2+}$ and $Cr(NH_3)_6^{3+}$

European Patent Application 0109767 discloses the use of

a chemically modified electrode which consists of an electrically conducting pyrolytic graphite or glassy carbon substrate with a redox mediator applied to the basal plane thereof. The specification also teaches which mediators can be used in association with the electrode.

The present invention is concerned with modification of an edge-plane graphite, or glassy carbon electrode surface so that it contains intrinsic positively charged groups.

In one aspect the invention consists in an electrode having a graphite surface at least part of which is an edge-plane graphitic or glassy carbon surface to which are attached, by surface C-O groups, Cr(III) complexes.

The electrode surface is preferably a glassy carbon or a polished, edge-plane or pyrolytic graphite surface, more preferably with a surface coverage of the complex of about 5 to 20%, for example 10%.

The complex is preferably a six-coordinate chromium(III) complex in which some of the ligands comprise the above mentioned functionalities while others comprise chemical species selected from the genus comprising; proteins, enzyme substrates, specific binding agents, intermediate metabolites and other physiologically and biochemically active species.

In one particular embodiment, the complex is an ammonia complex of the general formula;,

$$(NH_3)_Y\text{-}Cr(III)(O)_X\text{-}$$

where -O generally denotes surface functionalities and coordinated $H_2O$; and where X + Yn[O] equals 6, thereby representing the co-ordination number of the complex.

It is important to appreciate that the electrode of the present invention has linked to its surface certain complexes which are not of themselves mediators, as used in the prior art. The prior art uses separate mediators which may be physically or chemically coated on the electrode or may be dissolved in the solution. In the present invention, however, the complex formation permits reversible binding of the protein and promotes direct electrochemistry.

The modification leads to profound alteration of surface charge characteristics and permits persistent, and well-behaved <u>unmediated</u> electrochemistry of for example the negatively-charged photosynthetic "blue" copper protein plastocyanin, as discussed in more detail below.

The invention further consists in a method of the

modification of a graphite electrode at least part of which is an edge-plane graphitic or glassy carbon surface, in which the surface is treated with the complex Cr $(NH_3)_6^{+++}$ in concentrated aqueous ammonia.

The basis of the modification technique is the rapid formation (via the electrochemical generation of reactive, substitution-labile Cr(II) species) of substitution-inert Cr(III) complexes incorporating electrode surface C-O groups. A projected reaction scheme is outlined as shown below, where surface functionalities and coordinated $H_2O$ are represented generally as -O.

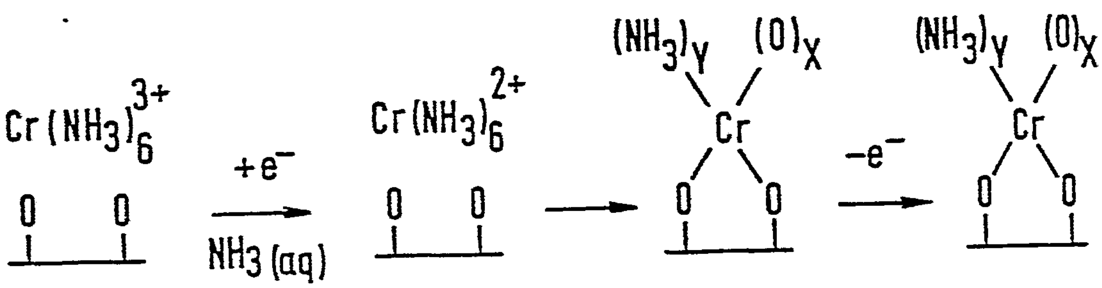


In the above embodiment the complex $Cr(NH_3)_6^{3+}$ is used, thus permitting surface modification to be carried out in the concentrated aqueous ammonia without complications due to insoluble Cr(III) hydroxy species. The use of aqueous ammonia ensures deprotonation of acidic surface groups, and the competition of $NH_3$ with $H_2O(OH^-)$ for the remaining chromium coordination

sites is believed to minimise extensive formation of lower-charged polymers through olation and oxolation.

In a further aspect the invention consists in a method for direct investigation of the electrochemistry of plastocyanin in which an electrode as defined above is utilised. Plastocyanin is a barrel shaped protein of MW 10500, and has a distinct negatively charged domain at one side of the molecule. Electron-transfer reactions are controlled by the electrostatic properties associated with this area.

The invention will be further described with reference to the following Example read in conjunction with the accompanying drawings in which:-

Figure 1A is DC cyclic voltammogram (20mV $s^{-1}$ of plastocyanin at a Cr-modified electrode. Pretreatment consisted of a single voltammetric cycle (-400,-1200mV) in $Cr(NH_3)_6^{3+}$/aqueous $NH_3$, followed by 4 min. sonication. For clarity, only the fifth scan is shown. Protein concentration is 30uM in 0.1M KCl, 5mM HEPES, pH 7.0. Temperature is 20°C.

Figure 1B is a wide scan ESCA spectrum of edge graphite

disc treated identically to Figure 1A. Scale expansions (x 5) of $Cr_{2p}$ and $N_{1S}$ spectral regions are shown.

Figure 2A is a DC cyclic voltammogram (20mV $s^{-1}$) of plastocyanin at an electrode with which $Cr(NH_3)_6^{3+}$/aqueous $NH_3$ voltammetric cycling has been restricted (-400,-800mv). Conditions are as for Figure 1A, scans 1-5 are shown. Result is similar to that observed under identical conditions with a routinely polished electrode.

Figure 2B is a wide scan ESCA spectrum of an edge graphite disc treated identically to Figure 2A. Scale expansions (x 5) of $Cr_{2p}$ and $N_{1s}$ spectral regions indicate incorporation of small amounts of $NH_3$ but signals in the $Cr_{2p}$ region lie within the noise level.

EXAMPLE

Electrode discs were cut from standard pyrolytic graphite with the a-b (basal) plane perpendicular to the disc face. For examination of protein electrochemistry, a 5mm disc was sealed in a Teflon electrode sheath. For parallel studies in which modification was examined by X-ray photoelectron spectroscopy, a 9mm disc was mounted in a PVC girdle and electrical contact was achieved by insertion of a stainless steel needle into the

intersection. For the electrochemically-induced coupling of chromium complexes to the electrode surface, an all-glass three compartment cell was used. The working compartment (total capacity 10 ml) was linked to a reference arm via a Luggin capillary, beneath the tip of which was sufficient space for a magnetic "microflea". The reference electrode was saturated calomel (SCE) for which the potential is +252mV vs NHE at 20$^{o}$, the temperature at which experiments were typically performed. The counter electrode was a piece of rolled platinum gauze, separated from the working compartment by a glass sinter. The design of the working compartment was such that 3ml of solution gave an adequate coverage of the Luggin tip and glass sinter.

In a typical experiment both the reference and counter arms were filled with an aqueous solution of $NH_4Cl$ (30mM), then sealed (suba-seal caps) with the appropriate electrodes in position. The working compartment was carefully dried with a cotton wool bud before adding solid $Cr(NH_3)Cl_3$ (8mg) followed by 3 ml of concentrated "880" ammonia. Dissolution was accomplished by magnetic stirring. Between modifications, a close fitting Teflon cap was placed over the working compartment. The solution was not degassed, reduction of $O_2$ was not apparent from the cyclic voltammetry, and bubbling served only to

evaporate $NH_3$.

Potential cycling or poising of the "edge" oriented pyrolytic graphite electrode in the $Cr)NH_3)_6^{3+}/NH_3$ solution was carried out using an Oxford Electrode potentiostat in conjunction with a Gould series 60000 chart recorder.

Following the modification pretreatment, electrodes for XPS or protein activity analysis were rinsed with distilled water then sonicated for various lengths of time, again in distilled water. Finally, they were carefully dried by drawing off the residue water onto the end of a clear piece of tissue.Spectra were obtained with an ESCALAB 5 spectrometer (VG Scientific, U.K.) with a $Mg_K\alpha 1{:}2$ excitation source (1253.6 eV).

For examination of protein electrochemical activity an all-glass cell incorporating a conventional three-electrode configuration was used. The SCE reference electrode was housed in a side arm from which communication to the working compartment was achieved via a Luggin capillary tip. The counter electrode consisted of a piece of platinum gauze annealed into the glass at one side of the working compartment interior. The normal operating volume for experiments was ca 500 mL of protein solution. This was deoxgenated by gently

passing a stream of humidified argon across the surface while stirring with a "microflea".

Plastocyanin is an electron carrier of green-plant chloroplasts which has been isolated as a copper containing protein having a molecular weight of about 11kD.(see Borchert et al Biochim. Biophys. Acta 1970, 197,78).

Achievement of stable well-behaved electrochemistry of spinach plastocyanin at un-modified edge-oriented pyrolytic graphic electrodes (i.e. subjected only to routine alumina slurry polishing and sonication) normally requires the addition of multivalent cations and reduced temperatures.

At low background electrolyte levels e.g. 5mM HEPES - 1 mM KCl, no electrochemical response is detectable at pH 7; voltammograms are identical to those of buffer alone. This observation is consistent with the expected presence of unshielded coulombic repulsion between protein and electrode. With increased electrolyte levels, e.g. 0.1M KCl, a plastocyanin response is observed but this is poor and short-lived. Fig 1B.

Following electrode pretreatment by single-scan reductive cycling in a concentrated aqueous ammonia

solution of $Cr(NH_3)_6Cl_3$ (typically 10mM), stable and well-behaved plastocyanin electrochemistry is observed at room temperature, as shown in Figure 1(A).

A similar marked improvement could also be observed with the cyclic voltammetry of two further proteins featuring negative charged interaction domains:- 2 4Fe-4s ferredoxin from an anaerobe Clostridium pasteurianum, and a modified form of mitochondrial cytochrome *c* in which the lysine residues have been converted to negatively charged groups.

The half-wave potential $E_{1/2}$ is +385mV vs. NHE at 20°C, close to potentiometrically determined values and peak separations are typically 60mV at a scan rate of 20mV $s^{-1}$. This result is reproducibly obtained upon $Cr(NH_3)_6^{3+}$/aqueous $NH_3$ modification, either by voltammetric cycling (typically one cycle at 20mV $s^{-1}$, between limits of *ca*. -400 and -1200mV vs. SCE or by poising at a potential of -1000mV or below for *ca*. 1 minute.

No deterioration of the plastocyanin electrochemical response is evident even after sonicating the modification electrode for 90 minutes. Parallel investigations with ESCA confirm the incorporation of Cr (and N) as further shown in Figure 1(B). The $Cr_{2p}$

intensity (relative to carbon) is typically consistent with a surface coverage of ca. 10%.

The surface coverage of Cr with respect to C was calculated from the attenuation of photoelectron flux with depth expected for an overlayer of Cr, formed on an array of C-O groups, at a periodic "edge" lattice structure. An analysis, using estimated ESCA cross sections and mean free paths, was used to derive the approximate coverage.

Control experiments show that restricting potential cycling to the region positive of -1000mv, or cycling in aqueous ammonia alone, gives only an impersistent and rather irreversible plastocyanin response, similar to that obtained for a routinely polished electrode, as shown in Figure 2(A).The corresponding ESCA spectra, as shown in Figure 2(B) accordingly shows neglible incorporation of Cr, although there is a small amount of N, most likely representing adsorbed $NH_3$.

The potential threshold for Cr modification, as judged by ESCA and plastocyanin electrochemical activity, lies in the region of -1000mV vs. SCE. This is close to reported values of the polarographic reduction potential for $Cr(NH_3)_6^{3+}$ and corresponds with the appearance of a small cathodic peak at ca.-1050mV in the reduction

cycle. It is believed that reduction of $Cr(NH_3)_6^{3+}$ produces labile Cr(II) species, a proportion of which coordinate to surface C-O functional groups and undergo rapid reoxidation. In view of the observed stability of the surface complexes, it is likely that two or more Cr-O (surface) bonds are involved. The complexes are thus comparable to those implicated in chrome tanning and dyestuffs technology and in chromium polymer derivations of semiconductor surfaces.

As stated above, plastocyanins (MW 10500) from higher plants transport electrons between photosystems II and I. As a consequence of the significant overall (and conservatively localised) negative charge, physiological and electrochemical activity is highly sensitive to coulombic interactions. Even with low background electrolyte levels, (e.g. 5mM HEPES  1mM KCl), the chromium-modified electrode is active toward plastocyanin. By contrast, examination of cytochrome c electrochemistry shows clearly marked inhibition of heterogeneous electron transfer as compared with the unmodified edge surface. The response at the Cr-modified electrode is thus consistent with the surface bearing positively charged domains which function to promote reversible binding of plastocyanin prior to electron transfer.

The surface coverage of Cr with respect to C was calculated from the attenuation of photoelectron flux with depth expected for a model of the modified surface in which an overlayer of Cr is formed on an array of C-O groups at a periodic "edge" lattice structure. This analysis yielded, for electrodes treated by single-scan reduction cycling (-400 to -1200mV vs. SCE) in $Cr(NH_3)_6^{3+}Cl_3$ as described above, Cr coverages (with respect to C) of _ca_ 9% (after 20 sec sonication), _ca_ 9% (after 4 minutes sonication) and _ca_ 23% (after 4 minutes stirring) as shown in Table I. Calculations used ESCA cross sections and mean free paths. The estimates show that after a short sonication period, a stable Cr-modified electrode surface is achieved with no further decrease in coverage at longer times. This is consistent with the stability of the electrochemical response of plastocyanin as observed after 4 minutes and then 90 minutes sonication.

Table 1

Cyclic voltammetric and spectroscopic parameters for modified "edge" graphite.

ESCA ANALYSIS

| SAMPLE | Treatment Range | Standardised Intensity[1] $C_{1S}$ | $O_{1S}$ |
|---|---|---|---|
| MODIFIED | Cycle or poise below -100mV | 7658(969)<br>8006 | 2439(120)<br>2190 |
| CONTROL | Cycle or poise in range -400 to -900mV | 7431(969)<br>6484 | 2084((719)<br>1741 |
| POLISH | --- | 7742(969)<br>8178 | 2574(720)<br>2013 |

ESCA ANALYSIS CONTINUED

| SAMPLE | (Band Energy[2]/ev) ($N_{1S}$ | $Cr_{2p}$ | Surface[3] Coverage | FARADAIC RESPONSE WITH PLASTOCYANIN $E_p$ (mV) Scan 1(5) | $E_{1/2}$ (mV vs.NHE) |
|---|---|---|---|---|---|
| MODIFIED | 160(852)<br>137 | 698(674.664)<br>763 | ca. 10% | 60(60)<br>60(60) | +387 |
| CONTROL | 74(853)<br>76 | n.d.<br>n.d. | | 85(>120) | |
| POLISH | n.d.<br>n.d. | n.d.<br>n.d. | - | 100(>130) | |

1.Band intensities were derived by integration of experimental data and are standarised for the number of scans and the width of scan. Prior to integration, background and satellite structure were substracted. All values are collected for the observed transmission characteristics of the electron energy analyser.

2. Typical literature values:

$Cr_{2p}$ 673,664eV; $N_{1S}$849eV

3 Scan rate 20mV $s^{-1}$

Claims.

1. An electrode for use in bioelectrochemistry and having a graphite or glassy carbon surface characterised in that at least part of the graphite or glassy carbon surface is an edge-plane graphitic surface or glassy carbon surface to which Cr (III) complexes are attached by surface C-O groups.

2. An electrode as claimed in claim 1 characterised in that the graphitic or glassy carbon surface is a polished pyrolytic graphite surface.

3. An electrode as claimed in claim 1 or 2 characterised by having a surface coverage of said complex of from 5% to 20%.

4. An electrode as claimed in claim 1, 2 or 3 characterised in that at least some of the ligands not bound to the graphite or glassy carbon by the surface C-O groups comprise a physiologically or biochemically active species which is thereby directly electrically linked to the electrode.

5.An electrode as claimed in claim 4 characterised in that the said ligand species is chosen from proteins, enzyme substrates, specific binding agents and intermediate metabolites.

6. An electrode as claimed in claim 5 characterised in that the protein is plastocyanin.

7. An electrode as claimed in any one preceding claim characterised in that the complex has the general formula:

$$(NH_3)_Y\text{-}Cr(III)\text{-}(O)_X\text{-}$$

where -O generally denotes the graphite surface functionalities used, together with any coordinated $H_2O$, and where X + Yn(O) equals six to represent the coordination number of the complex.

8. A method of producing an electrode as claimed in any one preceding claim characterised in that the edge-plane graphite surface or glassy carbon surface is contacted with the complex $Cr(NH_3)_6^{+++}$ in concentrated aqueous ammonia; the complex ion is electrochemically converted to a $Cr(NH_3)_6^{++}$ species labile to substitution of ligands, whereby at least bonding to the C-O surface groups takes place; and the chromium (II) complex thereby bound is electrochemically converted to the substitution-inert Cr(III) complex to provide stable direct electrochemical measurement at the electrode.

9. The use of the electrode as claimed in claim 4 for

direct investigation of the electrochemistry of a physiologically or biochemically active species.

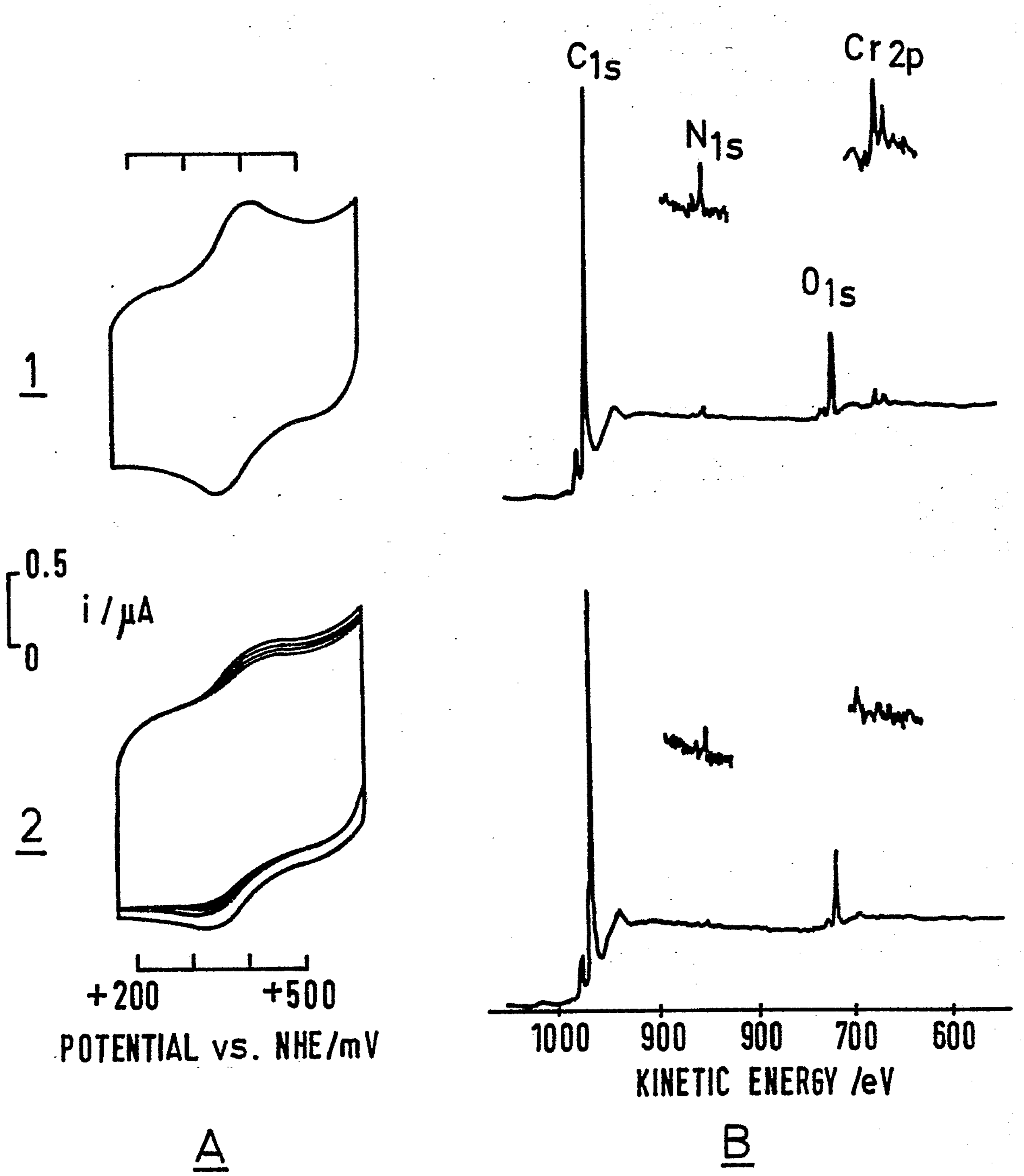

C1s
Cr 2p
N1s
O1s
1
2
0.5
i / µA
0
+200
+500
POTENTIAL vs. NHE/mV
1000
900
900
700
600
KINETIC ENERGY /eV
A
B